# EUROPEAN PATENT APPLICATION

(11) **EP 2 060 317 A1**
(43) Date of publication of application: **20.05.2009**
(21) Application number: 08019837.7
(22) Date of filing: 13.11.2008
(51) Int. Cl.: B01D 71/36, B01D 67/00

(54) **Crystalline polymer microporous film, manufacturing method of the same, and filtration filter**

(30) Priority: 16.11.2007 JP 2007298498
(71) Applicant: Fujifilm Corporation, Tokyo 106-8620 (JP)
(72) Inventor: Hokazono, Hirohisa, Kanagawa (JP); Taguchi, Toshiki, Tokyo (JP); Okada, Hidetaka, Tokyo (JP)
(74) Representative: HOFFMANN EITLE

(57) **Abstract**

A crystalline polymer microporous film including: a plurality of pores penetrating through from a first surface to a second surface, wherein the average pore size of pores at the first surface is larger than the average pore size of pores at the second surface, the average pore size of pores in the crystalline microporous film continuously changes from the first surface toward the second surface, and an exposed surface of the crystalline polymer microporous film has hydrophilicity represented by a wettability index of 30 dyne/cm or more.

## Description

### BACKGROUND OF THE INVENTION

### Field of the Invention

The present invention relates to a crystalline polymer microporous film with high filtration efficiency to be used for precisely filtering a gas, a liquid or the like, to a method of producing the crystalline polymer microporous film, and to a filtration filter.

### Description of the Related Art

Microporous films have been traditionally known and are finding increasing applications for filtration filters and the like (see "Synthetic Polymer Membrane" written by R. Kesting, published by McGrawHill). Examples of such microporous films include microporous films made of cellulose ester (see U.S. Patent Nos. 1421341; 3133132 and 2944017, Japanese Patent Application Publication (JP-B) Nos. 43-15698, 45-3313, 48-39586 and 48-40050); microporous films made of aliphatic polyamide (see U.S Patent Nos. 2783894; 3408315; 4340479; 4340480 and 4450126, Germany Patent No. 3138525, and Japanese Patent Application Laid-Open (JP-A) No. 58-37842); microporous films made of polyfluorocarbon (see U.S. Patent Nos. 4196070; 4340482, Japanese Patent Application Laid-Open (JP-A) Nos. 55-99934 and 58-91732); and microporous films made of polypropylene (see West Germany Patent No. 3003400).

These microporous films are used in the filtration and sterilization of water for pharmaceutical preparations, production processes for pharmaceutical preparations, foods, etc., as well as washing water for electronics. In recent years, they are used in a variety of fields and so their consumption is increasing. In particular, microporous films receive attention that can capture particles with high reliability. Among them, microporous films formed of crystalline polymer offer excellent chemical resistance, and in particular, crystalline polymer microporous films made of polytetrafluoroethylene (hereinafter may be referred to as "PTFE") offer excellent heat resistance and chemical resistance; therefore, the demand for PTFE microporous films is significantly growing.

Generally, each of microporous films has a smaller amount of filtration per unit area, this is, it has a shorter life span. For this reason, when they are used for industrial purposes, the film areas are increased, and thus there is no choice but to use a plural number of filtration units by arranging them in parallel with each other. Thus, from the perspective of cutting costs of filtration process, it is required to extend the filtration life. For example, as a microporous film effective in preventing decrease in flow rate due to clogging or the like, asymmetry thin-films are proposed in which the pore diameters are gradually reduced from inlet side toward outlet side (see Japanese Patent Application Publication (JP-B) Nos. 55-6406 and 4-68966).

Further, there are proposed a polytetrafluoroethylene porous film which is composed of a filtration layer having small pore diameter and a support layer having a diameter larger than that of the filtration layer (see Japanese Patent Application Laid-Open (JP-A) No. 4-351645), and a microporous film manufactured by coating a polytetrafluoroethylene sheet with an emulsion dispersion liquid of polytetrafluoroethylene and stretching the sheet (see Japanese Patent Application Laid-Open (JP-A) No. 7-292144), and other porous films.

However, when the asymmetry films disclosed in JP-B Nos. 55-6406 and 4-68966 are attempted to be manufactured using polytetrafluoroethylene, it is impossible to manufacture a microporous film in which the pore diameter is gradually reduced, because the polytetrafluoroethylene is soluble only in specific solvents. Furthermore, the use of the resultant film in filtration process causes a decrease in flow rate due to clogging or the like.

According to the microporous films disclosed in JP-A Nos. 4-351645 and 7-292144, it is possible to reduce the problem associated with JP-B Nos. 55-6406 and 4-68966, but on the other hand, they have a problem that a sufficient filtration life cannot be obtained because only surfaces of the films have small pore diameters.

Further, Japanese Patent Application Laid-Open (JP-A) No. 11-106553 proposes a method of hydrophilizing a fluorine resin porous film, in which an aqueous solution is prepared which has a concentration enabling a porous film to be internally impregnated with aqueous ketone, a fluorine resin microporous film is impregnated with the aqueous solution and subsequently impregnated with water so as to adjust the concentration of the aqueous ketone in the microporous film, followed by irradiation of an ultraviolet laser light. Japanese Patent Application Laid-Open (JP-A) No. 2007-154153 proposes a method of enhancing hydrophilicity of a film formed of a porous fluorine resin by chemically etching the film. These proposals make it possible to give hydrophilicity to fluorine resin porous films having inactive surfaces.

However, the PTFE microporous films according to these proposals have not achieved satisfactory performance in terms of flow rate and filtration life, and further improvements and developments are still desired.

### BRIEF SUMMARY OF THE INVENTION

The present invention aims to provide a crystalline polymer microporous film which is capable of efficiently capturing microparticles, achieving high-flow rate, has long filtration life and can be efficiently used in large-size equipment because of the high-flow rate; a manufacturing method of a crystalline polymer microporous film enabling efficient manufacturing of the crystalline polymer microporous film; and a filtration filter using the crystalline polymer microporous film.

Means for solving the aforesaid problems are as follows:
< 1 > A crystalline polymer microporous film including:
   a plurality of pores penetrating through from a first surface to a second surface,
      wherein the average pore size of pores at the first surface is larger than the average pore size of pores at the second surface, the average pore size of pores in the crystalline microporous film continuously changes from the first surface toward the second surface, and an exposed surface of the crystalline polymer microporous film has hydrophilicity represented by a wettability index of 30 dyne/cm or more.
< 2 > The crystalline polymer microporous film according to < 1 >, wherein the exposed surface of the crystalline polymer microporous film has a wettability index of 33 dyne/cm or more.
< 3 > The crystalline polymer microporous film according to any one of < 1 > and < 2 >, wherein the crystalline polymer microporous film is obtained by heating a second surface of a film composed of a crystalline polymer so as to form a semi-baked film with a temperature gradient along its thickness being formed, stretching the semi-baked film, and subjecting the stretched film to a hydrophilization treatment.
< 4 > The crystalline polymer microporous film according to < 3 >, wherein the average pore size of pores at the heated surface, which is the second surface of the crystalline polymer film, is smaller than the average pore size of pores at a non-heated surface of the film, which is opposite to the heated surface, and the average pore size of pores in the crystalline microporous film continuously changes from the non-heated surface toward the heated surface.
< 5 > The crystalline polymer microporous film according to any one of < 1 > to < 4 >, wherein the crystalline polymer is polytetrafluoroethylene.
< 6 > A manufacturing method of a crystalline polymer microporous film, the method including:
   asymmetrically heating a first surface of a film of crystalline polymer so as to form a semi-baked film with a temperature gradient along its thickness being formed,
   stretching the semi-baked film, and
   subjecting the stretched film to a hydrophilization treatment.
< 7 > The method according to < 6 >, wherein the crystalline polymer is polytetrafluoroethylene.
< 8 > The method according to any one of < 6 > and < 7 >, wherein the semi-baked film is uniaxially stretched.
< 9 > The method according to any one of < 6 > and < 7 >, wherein the semi-baked film is biaxially stretched.
< 10 > The method according to according to any one of < 6 > to < 9 >, wherein the hydrophilization treatment is carried out by impregnating the stretched film with an aqueous solution of any one of hydrogen peroxide water and an aqueous organic solvent.
< 11 > The method according to < 10 >, wherein the aqueous organic solvent is selected from ketones.
< 12 > The method according to any one of < 6 > to < 9 >, wherein the hydrophilization treatment is a chemical etching treatment.
< 13 > A filtration filter including the crystalline polymer microporous film according to any one of < 1 > to < 5 >.
< 14 > The filtration filter according to < 13 >, wherein the filtration filter is processed into a pleat form.
< 15 > The filtration filter according to any one of < 13 > and < 14 >, wherein the first surface of the crystalline polymer microporous film, in which the average pore size of pores is larger than the average pore size of pores at the second surface, is used as a filtration surface of the filtration filter.
   The crystalline polymer microporous film of the present invention has a plurality of pores penetrating through from a first surface to a second surface, wherein the average pore size of pores at the first surface is larger than the average pore size of pores at the second surface, the average pore size of pores in the crystalline microporous film continuously changes from the first surface toward the second surface, and an exposed surface of the crystalline polymer microporous film has hydrophilicity represented by a wettability index of 30 dyne/cm or more.

The crystalline polymer microporous film of the present invention is capable of efficiently capturing microparticles, achieving high-flow rate, has long filtration life and can be efficiently used in large-size equipment because of the high-flow rate, since it has a structure, in which the average pore size of pores at one surface (first surface) is larger than that of the other surface (second surface), and the average pore size of pores in the crystalline microporous film continuously changes from the first surface toward the second surface, and an exposed surface of the microporous film has hydrophilicity. Further, since the microporous film is excellent in heat resistance and chemical resistance, it can also be used in high-temperature filtration as well as in filtration of reactive reagents, which have not been achieved by conventional filtration filters.

The manufacturing method of a crystalline polymer microporous film includes asymmetrically heating a first surface of a film of crystalline polymer so as to form a semi-baked film with a temperature gradient along its thickness being formed, stretching the semi-baked film, and subjecting the stretched film to a hydrophilization treatment.

The manufacturing method of a crystalline polymer microporous film is capable of efficiently producing the crystalline polymer microporous film of the present invention.

Since the filtration filter of the present invention includes the crystalline polymer microporous film of the present invention, it is capable of efficiently capturing microparticles by performing filtration using a surface where the average pore size of pores is larger than that of the other side surface (non-heated surface) as an inlet surface. Further, because the film has a relatively large specific surface area, the film has a great effect of removing microparticles by adsorbing or absorbing them before they reach pores of minimum diameters, and is capable of greatly improving the filtration life.

### BRIEF DESCRIPTION OF THE SEVERAL VIEWS OF THE DRAWINGS

FIG. 1 is a view illustrating a structure of a common pleat filter element before being incorporated into a housing.

FIG. 2 is a view illustrating a structure of a common filter element before being incorporated into a capsule type filter cartridge.

FIG. 3 is a view illustrating a structure of a common capsule type filter cartridge which is integrally formed with a housing.

### DETAILED DESCRIPTION OF THE INVENTION

### (Microporous film of crystalline polymer and manufacturing method of a crystalline polymer microporous film)

A crystalline polymer microporous film of the present invention has a plurality of pores penetrating through from a first surface to a second surface, wherein the average pore size of pores at the first surface is larger than the average pore size of pores at the second surface, the average pore size of pores in the crystalline microporous film continuously changes from the first surface toward the second surface, and an exposed surface of the crystalline polymer microporous film has hydrophilicity represented by a wettability index of 30 dyne/cm or more.

The manufacturing method of a crystalline polymer microporous film of the present invention includes at least an asymmetric heating step, a stretching step, and a hydrophilization treatment step, includes a crystalline polymer film preparing step, and further include other steps in accordance with the necessity.

Hereinafter, the crystalline polymer microporous film and the manufacturing method of a crystalline polymer microporous film will be described in detail.

In the present invention, an exposed surface of the crystalline polymer microporous film is hydrophilic. The term "hydrophilic" means that the exposed surface has a wettability index of 30 dyne/cm or more. The wettability index is preferably 33 dyne/cm or more, and more preferably 40 dyne/cm or more. Preferably, the upper limit of the wettability index is 73 dyne/cm or less.

When the wettability index is less than 30 dyne/cm, the resultant film may not sometimes filter aqueous liquid having high surface tension.

Note that the exposed surface includes circumferential areas and internal portions of pores, besides the surfaces of the crystalline polymer microporous film.

The wettability index of a microporous film can be measured, for example, through the use of a wettability index standard liquid defined in JIS K6768 after sufficiently washing the crystalline polymer microporous film with pure water, drying the film. Specifically, the wettability index of a microporous film can be measured by successively dropping on a crystalline polymer microporous film a series of mixture liquids whose surface tensions sequentially vary under the atmospheric measurement conditions (23°C, and relative humidity of 50%), and finding a highest surface tension of a mixture liquid when the crystalline polymer microporous film becomes wet with the mixture liquid. The highest surface tension can be determined as the wettability index of the microporous film.

The hydrophilization treatment of the crystalline polymer microporous film will be described below.

The crystalline polymer microporous film of the present invention is obtained by heating a first surface of a film composed of a crystalline polymer so as to form a semi-baked film with a temperature gradient along its thickness being formed, stretching the semi-baked film, and subjecting the stretched film to a hydrophilization treatment.

In this case, it is desired that the average pore size of pores at the surface to which heat has been applied be smaller than the average pore size of pores at a non-heated surface, which is opposed to the heated surface, and the average pore size of pores in the crystalline microporous film continuously change from one surface toward the other surface. In other words, pores are continuous pores from a first surface toward a second surface of the film where pores open at both ends.

In the following descriptions, a surface (first surface) of a crystalline polymer microporous film at which the average pore size of pores is larger than that of the other surface (second surface) is referred to as "a non-heated surface" and the other surface (second surface) at which the average pore size of pores is smaller than that of the first surface is referred to as "a heated surface". These surfaces are named for convenience to make the present invention more understandable. Therefore, after heating and semi-baking one of surfaces of a non-baked crystalline polymer film, the semi-baked surface may be called a "heated surface".

### - Crystalline Polymer -

In the present invention, the term "crystalline polymer" means a polymer having a molecular structure wherein there exist mixedly a crystalline region and an amorphous region. In the crystalline region, long-chain molecules are arranged in a regular manner, and in the amorphous region, long-chain molecules are randomly arranged. Such a polymer can exhibit crystallinity by physical treatment. For instance, when a polyethylene film is stretched by external forces, first, a phenomenon is observed in which a transparent film becomes white turbid. The phenomenon is called "crystallinity development" and derives that the molecular arrangement in the polymer is aligned in one direction by external forces.

The crystalline polymer is not particularly limited and may be suitably selected in accordance with the intended use. Examples thereof include polyalkylenes, polyesters, polyamides, polyethers, and liquid crystalline polymers. Specific examples of the crystalline polymers include polyethylenes, polypropylenes, nylons, polyacetals, polybutylene terephthalates, polyethylene terephthalates, syndiotactic polystyrenes, polyphenylene sulfides, polyether-ether ketones, all aromatic polyamides, all aromatic polyesters, fluorine resins, and polyether nitrile.

Of these, from the perspective of chemical resistance and handleability, polyalkylenes (for example, polyethylenes, polypropylenes) are desired; a fluorine-containing polyalkylene in which part or all of hydrogen atoms in an alkylene group are substituted by fluorine atoms; and polytetrafluoroethylene (PTFE) is most preferably used.

The polyethylenes vary in density depending on the degree of branching, and polyethylenes having a high degree of branching and a low crystallization degree are classified as low-density polyethylene (LDPE), and polyethylenes having a low degree of branching and a high crystallization are classified as high-density polyethylene (HDPE), both of which can be used. Among them, high-density polyethylenes are most preferable in terms of controlling the crystallinity.

The glass transition temperature of the crystalline polymer is preferably 40°C to 400°C, and more preferably 50°C to 350°C. The mass average molecular mass of the crystalline polymer is preferably 1,000 to 100,000,000. The number average molecular mass is preferably 500 to 50,000,000, and more preferably 1,000 to 10,000,000.

The crystalline polymer microporous film of the present invention has a feature that the average pore size of pores at a non-heated surface of the film is larger than that of a heated surface thereof.

When the film thickness of the crystalline polymer microporous film is determined as "10", the average pore size of pores at a portion with a thickness of "1" in the depth direction from the film surface is determined as P1, and the average pore size of pores at a portion with a thickness of "9" is determined as P2, the value of P1/P2 is preferably 2 to 10,000, and more preferably 3 to 100.

Further, in the crystalline polymer microporous film, the average pore size ratio (non-heated surface/heated surface) of a non-heated surface to a heated surface is preferably 5 times to 30 times, more preferably 10 times to 25 times, and still more preferably 15 times to 20 times.

The average pore size of pores can be measured as follows. First, a photograph of a film surface (SEM photograph, at 1,000-fold to 5,000-fold magnification) is taken by a scanning electron microscope (S-4000 model; deposited by E1030 model, both manufactured by Hitachi Ltd.), the photograph obtained is taken into an image processor (name of base machine: TV IMAGE PROCESSOR TVIP-4100II manufactured by Nippon Avionics Co., Ltd.; name of control software: TV IMAGE PROCESSOR IMAGE COMMAND 4198 produced by Ratoc Systems Engineering Co., Ltd.) to obtain an image of only crystalline polymer fibers. Then, the image is processed by arithmetic processing, thereby an average pore size can be measured.

The crystalline polymer microporous film of the present invention includes both of an embodiment (first embodiment) in which the average pore size of pores in the crystalline microporous film continuously changes from a non-heated surface toward a heated surface, in addition to the above-mentioned features, and an embodiment (second embodiment) that the microporous film has a single-layer structure. By further adding these additional features, the filtration life can be effectively extended.

The description "the average pore size of pores in the crystalline microporous film continuously changes from a non-heated surface toward a heated surface" in the first embodiment means that in a graph of distance (d) from the non-heated surface along the film thickness (i.e. depth as measured from the front surface) vs. average pore size (D) of pores, a single continuous line can be drawn. In a region from the non-heated surface (d= 0) to the heated surface (d = film thickness), the gradient of the line (dD/dt) may have a negative region only (dD/dt < 0) or may have negative region(s) as well as region(s) where the line levels off (gradient = 0), or may have negative region(s) as well as positive region(s) (dD/dt > 0). It is preferable that the gradient of the line (dD/dt) have a negative region only (dD/dt < 0) or have negative region(s) as well as region(s) where the line levels off (gradient = 0). It is more preferable that the gradient of the line (dD/dt) have a negative region only (dD/dt < 0).

Preferably, the region where the gradient of the line (dD/dt) is negative includes at least the non-heated surface of the film. In the region where the gradient of the line is negative (dD/dt < 0), the gradient of line may be constant or may vary. For instance, in the case where a crystalline polymer microporous film of the present invention includes only a negative gradient of the line (dD/dt < 0), it can take an embodiment where the value of dD/dt at the heated surface of the film is greater than the value of dD/dt at the non-heated surface of the film. Furthermore, in this case, it can also take an embodiment where the nearer to the heated surface of the crystalline polymer microporous film than the non-heated surface, the greater the value dD/dt becomes (an embodiment where the absolute value decreases).

The description "single-layer structure" in the second embodiment excludes multilayer structures that are formed by depositing or laminating two or more layers. In other words, the term "single-layer structure" means a structure having no boundary portions between layers, which are present in a multilayer structure. In the second embodiment, it is preferred that there exists a surface having an average pore size of pores that is smaller than the average pore size of pores at a non-heated surface and is larger than the average pore size of pores at a heated surface.

Preferably, the crystalline polymer microporous film has both features of the first and second embodiments. More specifically, as the crystalline polymer microporous film, it is preferable that the average pore size of pores at the non-heated surface be larger than that of the heated surface, the average pore size of pores in the crystalline microporous film continuously changes from the non-heated surface toward the heated surface, and the film have a single-layer structure. Such a film that satisfies the above features makes it possible to more efficiently capture microparticles when filtration is carried out from the non-heated surface side and greatly extend filtration life, and can be easily manufactured at inexpensive costs.

The film thickness of the crystalline polymer microporous film of the present invention is preferably 1 µm to 300 µm, more preferably 5 µm to 100 µm, and still more preferably 10 µm to 80 µm.

### < Method for producing crystalline polymer microporous film >

The manufacturing method of a crystalline polymer microporous film of the present invention includes at least an asymmetric heating step, a stretching step, and a hydrophilization treatment step, includes a crystalline polymer film preparing step, and further include other steps in accordance with the necessity.

### - Crystalline polymer film preparation step -

The type of a crystalline polymer used as a starting material in production of an unbaked crystalline film composed of crystalline polymer is not particularly limited, and the above-noted crystalline polymers may be preferably used. Of these, a crystalline polymer in which polyethylene or hydrogen atoms thereof are substituted by fluorine atoms is preferably used; and polytetrafluoroethylene (PTFE) is most preferably used.

The number average molecular mass of the crystalline polymer to be used as a starting is preferably 500 to 50,000,000 and more preferably 1,000 to 10,000,000.

As a crystalline polymer to be used as a starting material, polyethylene is preferable. For example, polytetrafluoroethylene can be used. As for the polytetramethylene, commonly, a polytetrafluoroethylene prepared by an emulsification polymerization can be used, and it is preferable to use a polytetrafluoroethylene in fine powder form obtained by coagulation of an aqueous dispersion, which has been obtained by an emulsification polymerization.

The average number molecular mass of the polytetrafluoroethylene to be used as a starting material is preferably 2,500,000 to 10,000,000, and more preferably 3,000,000 to 8,000,000.

The polytetrafluoroethylene starting material is not particularly limited and may be suitably selected from commercially available polytetrafluoroethylene starting materials. For example, POLYFLON FINE POWDER F104U produced by Daikin Industries, Ltd.) is preferably exemplified.

Preferably, a mixture consisting of the polytetrafluoroethylene an extrusion aid is prepared, and the paste is extruded by rolling with pressure to yield a film. For the extrusion aid, it is preferable to use a liquid lubricant. Specifically, solvent naphtha, and white oil are exemplified. Alternatively, commercially available hydrocarbon oils may be used, for instance, ISOPER series, produced by ESSO Sekiyu K.K. The additive amount of the extrusion aid is preferably 20 parts by mass to 30 parts by mass per 100 parts by mass of the crystalline polymer.

The paste extrusion is preferably carried out at 50°C to 80°C. The shape of the extruded article is not specifically limited and can be appropriately determined according to the intended purpose. In general, rod shape or rectangular shape is preferable. The extruded article is then stretched into a film by application of pressure. For example, the stretching is carried out by calendering at a calendering speed of 50m/min with a calender roller. The stretching temperature is generally set to 50°C to 70°C. Thereafter, the film is heated for removal of the extrusion aid to form a non-heated multilayered crystalline polymer film. The heating temperature is determined depending on the types of crystalline polymers used; it is preferably 40°C to 400°C, more preferably 60°C to 350°C. When polytetrafluoroethylene is used, for example, the heating temperature is preferably 150°C to 280°C, more preferably 200°C to 255°C. The heating can be carried out by passing the film through an air heating/drying furnace. The thickness of the non-heated multilayered crystalline polymer film produced in this way can be adjusted according to the intended thickness of the final crystalline polymer microporous film. When the non-heated film is to be stretched in a subsequent step, the thickness needs to be adjusted while taking thickness reduction associated with stretching into consideration.

Note that the non-heated multilayer crystalline polymer film can be manufactured by reference to "POLYFLON Handbook" (Daikin Industries Ltd. (1983)).

### - Asymmetric heating step -

The asymmetric heating step is a step of heating one surface of a film composed of a crystalline polymer so as to form a semi-baked film with a temperature gradient along its thickness being formed.

The term "semi-baked" means that a crystalline polymer is heated at a temperature which is equal to or higher than the melting point of a baked product thereof and is equal to or lower than the melting point of the unbaked product plus 15°C.

In the present invention, the unbaked product of crystalline polymer means a product that has not been subjected to heat treatment by baking. The melting point of the crystalline polymer is a peak temperature of endothermic curve obtained when measuring the unbaked product of crystalline polymer using a differential scanning calorimeter. The melting point of the baked product and the melting point of the unbaked product vary depending on the type of the crystalline polymer used and the average molecular mass, however, they are preferably 50°C to 450°C, and more preferably 80°C to 400°C.

These temperatures are considered as follows. For instance, when the crystalline polymer is polytetrafluoroethylene, the melting point of a resultant baked product is approximately 324°C, and the melting point of an unbaked product is approximately 345°C. Therefore, when polytetrafluoroethylene is processed into a semi-baked product, the melting point of the semi-baked product is preferably 327°C to 360°C, and more preferably 335°C to 350°C. For example, it may heated to a temperature of 345°C. The semi-baked product is in a state where a material having a melting point of approximately 324°C and another material having a melting point of approximately 345°C are present mixedly.

The half-baking is carried out by heating one surface (heated surface) of a film composed of a crystalline polymer, thereby the heating temperature can be asymmetrically controlled along its thickness, and a crystalline polymer microporous film according to the present invention can be easily manufactured.

As a temperature gradient along its thickness of the film composed of a crystalline polymer, the difference in temperature between the non-heated surface and the heated surface is preferably 30°C or more, and more preferably 50°C or more.

For the heating method, various methods can be used, such as a method of blowing hot air, a method of making contact with a heat medium, a method of making contact with a heated material, a method of irradiating infrared rays, and a method of heating by electromagnetic wave such as micro wave. The heating method is not particularly limited, however, a method of making a film surface contact with a heated material, and irradiation of infrared rays are particularly preferable. For the heated material, a heat roll is suitably selected. With the use of a heat roll, continuous asymmetric heating is enabled in an industrial flow system, and in addition, temperature control and device maintenance are simple. The temperature of the heating roll can be set to a temperature for the above-mentioned semi-heated product. The time during which the heating roll is in contact with the film is so selected that intended asymmetric heating is sufficiently effected and it is usually 30 seconds to 120 seconds, preferably 45 seconds to 90 seconds, and more preferably 60 seconds to 80 seconds.

The irradiation of infrared rays is not particularly limited and may be suitably selected in accordance with the intended use.

Generally, on the definition of the infrared rays, it is possible to refer to "*Jitsuyo Sekigaisen*" (practically usable infrared rays) (published by Ningen to Rekishi Co. in 1992). In the present invention, the infrared ray means electromagnetic waves having a wavelength of 0.74 µm to 1,000 µm. Among the electromagnetic waves, those having a wavelength of 0.74 µm to 3 µm are determined as near-infrared rays, and those having a wavelength of 3 µm to 1,000 µm are determined as far-infrared rays.

In the present invention, it is preferred that there exist a difference in temperature between a non-heated surface and a heated surface of a semi-baked film, and thus far-infrared rays are preferably used, which are advantageous in heating the surface of the semi-baked film.

The type of a device used in the irradiation of infrared rays is not particularly limited and may be suitably selected in accordance with the intended use, as long as it is capable of applying infrared rays having an intended wavelength to a target film. Generally, heaters such as electric lamp (halogen lamp) can be used as near-infrared rays, and heaters such as ceramics, quartz, metal oxide surface can be used as far-infrared rays. By irradiation of infrared rays, it is possible to industrially perform half-baking on assembly lines in a continuous manner, with easy temperature controlling and easy maintenance of equipment. Further, because the film can be irradiated with infrared rays in a non-contact manner, it can make the film surface keep clean and causes no defect such as pilling.

The temperature of the film surface in the irradiation of infrared rays can be controlled by the output power of an infrared-ray irradiation device used, the distance between the infrared-ray irradiation device and the film surface, the irradiation time of infrared rays (transportation speed), and atmospheric temperature. The temperature of the film surface can be set to a temperature, in view of the temperature required when processed in the semi-baked product, however, it is preferably 327°C to 380°C, and more preferably 335°C to 360°C. When the surface temperature is lower than 327°C, the crystallized state may not be changed, and thus the pore diameters may not be controlled. When it is higher than 380°C, the whole of the film is melted, and thus it is excessively deformed, and the polymer may be thermally decomposed.

The irradiation time of infrared rays is not particularly limited and is necessary for making intended half-baking sufficiently progress. It is usually 30 seconds to 120 seconds, preferably 45 seconds to 90 seconds, and more preferably 60 seconds to 80 seconds.

The heat treatment in the asymmetric heating step may be carried out in a continuous manner or may be carried out several times intermittently at certain intervals.

When the heated surface of the film is heated in a continuous manner, the temperature gradient needs to be kept at both the heated surface and the non-heated surface. So, it is desirable that the heated surface be heated while cooling the non-heated surface.

The method of cooling the non-heated surface is not particularly limited and may be suitably selected in accordance with the intended use. For instance, various methods can be used, such as a method of blowing cool air, a method of making contact with a refrigerant, a method of making contact with a cooled material, and a method of cooling by standing to cool. Preferably, the non-heated surface is cooled by making the non-heated surface with a cooled material. For the cooled material, in particular, a cooling roll is suitably selected. With the use of a cooling roll, similarly to the heating treating of the heated surface, it is possible to industrially perform half-baking on assembly lines in a continuous manner, with easy temperature controlling and easy maintenance of equipment. The temperature of the cooling roll can be set so as to be a difference temperature from the temperature required when processed in the semi-baked product. The time for making the film with a cooling roll is necessary for making intended half-baking sufficiently progress. Based on the assumption that the cooling treatment is done simultaneously with the heating treatment, it is usually 30 seconds to 120 seconds, preferably 45 seconds to 90 seconds, and more preferably 60 seconds to 80 seconds.

As to the surface material for the heat roll and cooling roll, usually, stainless steels, which are excellent in durability, are suitable. Particularly preferred is SUS316. In the production method of the present invention, it is preferable to make the non-heated surface contact with the heat roll and cooling roll. However, a roller whose temperature is set to be lower than the temperatures of the heat roll and cooling roll be made contact with the heated surface of the film. For instance, a film may be fitted along a heat roll by press-contacting a roller whose temperature is set to room temperature, on a heated surface of a film. Alternatively, a heated surface may be made contact with a guide roll before or after making the film contact with a heat roll.

Furthermore, when the asymmetric heating step is carried out intermittently, it is preferable to prevent the temperature of the non-heated surface from increasing by intermittently heating the heated surface of the film and intermittently cooling the non-heated surface of the film.

### - Stretching step -

It is preferred that thereafter, the semi-baked film be stretched, and the stretching be carried out both along the length and width of the film. The film may be stretched along the length and width either at different times or at the same time (biaxially).

When the film is stretched along the length and width at different times, it is preferable that widthwise stretching be preceded by lengthwise stretching.

It is preferable that the film be stretched along its length by 4 times to 100 times the original length, more preferably 8 times to 90 times, still more preferably 10 times to 80 times. The temperature for lengthwise stretching is preferably 100°C to 300°C, more preferably 200°C to 290°C, most preferably 250°C to 280°C.

It is preferable that the film be stretched along its width by 10 times to 100 times the original width, more preferably 12 times to 90 times, still more preferably 15 times to 70 times, most preferably 20 times to 40 times. The temperature for widthwise stretching is preferably 100°C to 300°C, more preferably 200°C to 290°C, most preferably 250°C to 280°C.

It is preferable that the film be stretched by 50 times to 300 times the original area, more preferably 75 times to 280 times, still more preferably 100 times to 260 times. Upon stretching, the crystalline polymer film may be pre-heated to a temperature not greater than the stretching temperature.

Where necessary, thermal fixation may be effected after stretching. In general, the thermal fixation temperature is preferably not less than the stretching temperature, but not greater than the melting point of the crystalline polymer.

After stretching the film, the film may be subjected to thermal fixation treatment. Generally, the thermal fixation is preferably performed at a temperature equal to or higher than the stretching temperature and less than the melting point of the baked product of crystalline polymer.

### - Hydrophilization treatment step -

The hydrophilization treatment step is a step of subjecting the stretched film to a hydrophilization treatment.

Examples of the hydrophilization treatment include (1) treatment in which the stretched film is impregnated with an aqueous solution of hydrogen peroxide water or aqueous organic solvent, and the resultant film is irradiated with an ultraviolet laser; and (2) chemical etching treatment.

Examples of aqueous organic solvents to be used in ultraviolet laser irradiation after the stretched film is impregnated with the aqueous solution of hydrogen peroxide water or aqueous organic solvent include ethers (such as tetrahydrofuran, 1,4-dioxan, ethylene glycol monoalkyl ether, ethylene glycol dialkyl ether, diethylene glycol monoalkyl ether, and diethylene glycol dialkyl ether); ketones (such as acetone, methylethylketone, cyclohexanone, diacetyl, and diacetyl acetone); alcohols (methanol, ethanol, propanol, hexyl alcohol, ethylene glycol, isopropyl alcohol, butanol, ethylene chlorohydrin, and glycerin): aldehydes (such as acetaldehyde, and propion aldehyde); amines (such as triethylamine, and piperidine); and esters (such as methyl acetate, and ethyl acetate).

Of these, preferred are ketones, more preferred are acetone, and methylethylketone, and particularly preferred is acetone. The concentration of the aqueous solution of hydrogen peroxide water or aqueous organic solvent in the stage of impregnating the crystalline polymer microporous film with the aqueous solution slightly differs depending on the material of crystalline polymer microporous film and the size of fine pores. When acetone or methylethylketone is used, the concentration is preferably 85% by mass to 100% by mass. As for the concentration of the aqueous solution of hydrogen peroxide water or aqueous organic solvent inside the crystalline polymer microporous film in the stage of ultraviolet laser irradiation, as expressed by a light absorbance at a wavelength of an ultraviolet laser, it is preferably 0.1 to 10. For instance, when acetone is used as the aqueous solution and KrF is used as a light source, the concentration is equivalent to 0.05% by mass to 5% by mass. The light absorbance is preferably 0.1 to 6, and more preferably 0.5 to 5. When a crystalline polymer microporous film containing an aqueous solution of hydrogen peroxide water or aqueous organic solvent whose concentration is adjusted to fall within the above-mentioned range is irradiated with an ultraviolet laser, a satisfactory hydrophilic effect can be obtained with an exposure amount far lower than ever before.

Generally, when an aqueous organic solvent having a boiling point of 50°C to 100°C is used, the effect of hydrophilization treatment by ultraviolet laser irradiation is high, and the solvent is readily removed from the film that has been subjected to a hydrophilization treatment. However, when an aqueous organic solvent having a boiling point higher than 100°C is used, it becomes difficult to remove the aqueous organic solvent from the film that has been subjected to a hydrophilization treatment.

When the hydrophilization treatment is carried out by irradiating with an ultraviolet laser a crystalline polymer microporous film that has been impregnated with an aqueous organic solvent, in order to obtain a uniform and high hydrophilization treatment effect, the concentration of the aqueous solution of the aqueous organic solvent in the crystalline polymer microporous film is adjusted by impregnating the crystalline polymer microporous film, which has been impregnated with the aqueous organic solvent, with water so the light absorbance at a wavelength of the ultraviolet laser used becomes 0.1 to 10, preferably 0.1 to 6, and most preferably 0.5 to 5. When the light absorbance is lower than 0.1, it may become difficult to obtain a sufficient hydrophilization treatment effect, and when it is higher than 10, the aqueous solution largely absorbs the light energy, and it may becomes difficult to sufficiently provide hydrophilicity into fine pores.

As a method of impregnating the crystalline polymer microporous film with water to adjust the concentration of the aqueous solution of aqueous organic solvent in the microporous film, it is preferred that the microporous film be immersed in another aqueous solution which contains the same aqueous organic solvent at a substantially low concentration.

Note that the light absorbance means an amount of light defined by the following expression.

Light absorbance ≡ log₁₀ (I₀/I) = εcd

In the expression, ε represents an absorbance coefficient of an aqueous organic solvent, "c" represents a concentration (mole/dm³) of an aqueous solution of the aqueous organic solvent, "d" represents a length of transmitted optical path (cm), I₀ represents a transmittance intensity of light of a medium only, and I represents a transmittance intensity of light of the solution. In the present invention, a concentration of the aqueous solution with which the light absorbance becomes x means a concentration with which the light absorbance becomes x when measured with a measurement cell of 1 cm as "d". However, in the case where such a high concentration that makes the measurement of light absorbance difficult due to excessively low quantity of transmitted light with the value of d of 1cm, a light absorbance obtained using a measurement cell of 0.2 cm as "d" was multiplied by 5, and the calculated value was determined as the light absorbance.

The method of impregnating the crystalline polymer microporous film with the aqueous solution of hydrogen peroxide water or aqueous organic solvent is not particularly limited and may be suitably selected in accordance with the intended use. Immersion method, atomizing method, coating method or the like may be suitably employed according to the shape and size of the crystalline polymer microporous film. Of these, immersion method is generally used.

The impregnation temperature of the aqueous solution of hydrogen peroxide water or aqueous organic solvent is preferably 10°C to 40°C, from the perspective of diffusion rate of the aqueous solution into fine pores of the crystalline polymer microporous film. When the impregnation temperature is lower than 10°C, a relatively long length of time is required to sufficiently diffuse the aqueous solution into fine pores. When it is higher than 40°C, it is unfavorable because the evaporation rate of the aqueous organic solvent is increased.

After the crystalline polymer microporous film is subjected to immersion treatment, the concentration of the aqueous solution of hydrogen peroxide water or aqueous organic solvent is adjusted within the above-mentioned range, and then the microporous film is subjected to the following ultraviolet laser irradiation.

For the ultraviolet laser, those having a wavelength of 190 nm to 400 nm are preferable. Examples thereof include argon ion lasers, krypton ion lasers, N₂ lasers, dye lasers, and excimer lasers. Of these, KrF excimer laser (wavelength: 248 nm), ArF excimer laser (wavelength: 193 nm), and XeC1 excimer laser (308 nm) are particularly preferable because they allow for obtaining a high output power for a long period of time.

Typically, the irradiation of excimer laser light is carried out at room temperature in the air, however, it is preferred to do it in nitrogen atmosphere. The conditions for irradiating excimer laser light differ depending on the type of fluorine resin used and the desired level of surface modification, however, typically employed irradiation conditions are as follows:
- fluence: 10 mJ/cm² or higher/pulse
- incident energy: 0.1 J/cm² or higher

Particularly suitably employed irradiation conditions of KrF excimer laser, ArF excimer laser, and XeC1 excimer laser are as follows.
• KrF fluence: 50 mJ/cm² to 500 mJ/cm²/incident energy per pulse: 0.25 J/cm² to 10.0 J/cm²
• ArF fluence: 10 mJ/cm² to 500 mJ/cm²/incident energy per pulse: 0.1 J/cm² to 10.0 J/cm²
• XeC1 fluence: 50 mJ/cm² to 600 mJ/cm²/incident energy per pulse: 3.0 J/cm² to 100 J/cm²

For the (2) chemical etching treatment, oxidative decomposition is exemplified in which a fluorine resin constituting the crystalline polymer microporous film is decomposed using an alkali metal to remove the decomposed portions.

The oxidative decomposition is carried out using, for example, a solution containing an organic alkali metal. When the crystalline polymer microporous film is subjected to chemical etching treatment using a solution containing an organic alkali metal, hydrophilicity is imparted to the surface of the film, and a layer which turned brown in color (brown layer) is formed. The brown layer is composed of decomposed matters of fluorine resin containing sodium fluoride, and a polymer between naphthalene and anthracene. These components are preferably removed because there may be cases where they are mixed in the filtrate by dropping-out, decomposition, elusion or the like. These components can be removed by oxidative decomposition using hydrogen peroxide, hypochlorous soda, ozone, or the like.

The chemical etching treatment can be carried out using a solution containing an organic alkali metal. Specifically, it can be carried out by immersing the crystalline polymer microporous film in a solution containing an organic alkali metal. In this case, the chemical etching treatment is carried out from the surfaces of the crystalline polymer microporous film, and therefore, it is also possible to subject only portions near both of the surfaces. However, in order to improve water retention ability of the film, it is preferred that not only portions near the surfaces but also the inside of the crystalline polymer microporous film be subjected to chemical etching treatment. Even when a chemical etching treatment is applied to the inside of the crystalline polymer microporous film, reduction in functionality as a separated film is small.

For the solution containing an organic alkali metal used in the chemical etching treatment, organic solvent solutions of methyl lithium, or tetrahydrofuran of a metal sodium-naphthalene complex or a metal sodium-anthracene complex. Of these, metal sodium-naphthalene complex solutions, in which naphthalene is used as aromatic radical anion, are widely used. However, to apply the chemical etching treatment to the inside of the crystalline polymer microporous film, it is preferable to use benzophenone, anthracene, and biphenyl as aromatic radical anion.

The crystalline polymer microporous film of the present invention can be used in various applications and can be suitably used, in particular, as an after-mentioned filtration filter.

### (Filtration filter)

A filtration filter of the present invention is characterized in that it includes a crystalline polymer microporous film of the present invention.

When the crystalline polymer microporous film of the present invention is used as a filtration filter, it is used such that its front surface (surface where the average pore size of pores is large) becomes an inlet side. Specifically, this surface serves as a filtration surface of the filter. This enables efficient capturing of microparticles.

Moreover, since the crystalline polymer microporous film of the present invention has a large specific surface, microparticles entered from the film surface can be removed by adsorbing or absorbing them before they reach pores of minimum diameters. Accordingly, clogging hardly occurs and thereby a high filtration efficiency can be retained for a long period of time.

The filtration filter of the present invention realizes a filtration flow rate of at least 5mL/cm^{2.}min when filtration is carried out at a differential pressure of 0.1 kg/cm².

As to the shape of the filtration filter of the present invention, the following are exemplified: a pleat form in which a filter film is folded; spiral; in a spiral form in which a filter film is rolled-up; in a frame-and-plate form in which a plurality of disc-shaped filter films are disposed in a film structure; in a tube form in which a filter film is shaped in a tube form. Of these, a filtration filter shaped in a pleat form is particularly preferable in terms of capability of increasing the effective surface area of filters for filtration per unit cartridge.

The filtration filters of the present invention are classified into the following categories: element replaceable-type filter cartridges which allows for replacing only filter element when a deteriorated filter is replaced by a new one; and capsule-type filter cartridges in which filter elements and a filtration housing are integrally formed in a unit, and the housing itself is disposable.

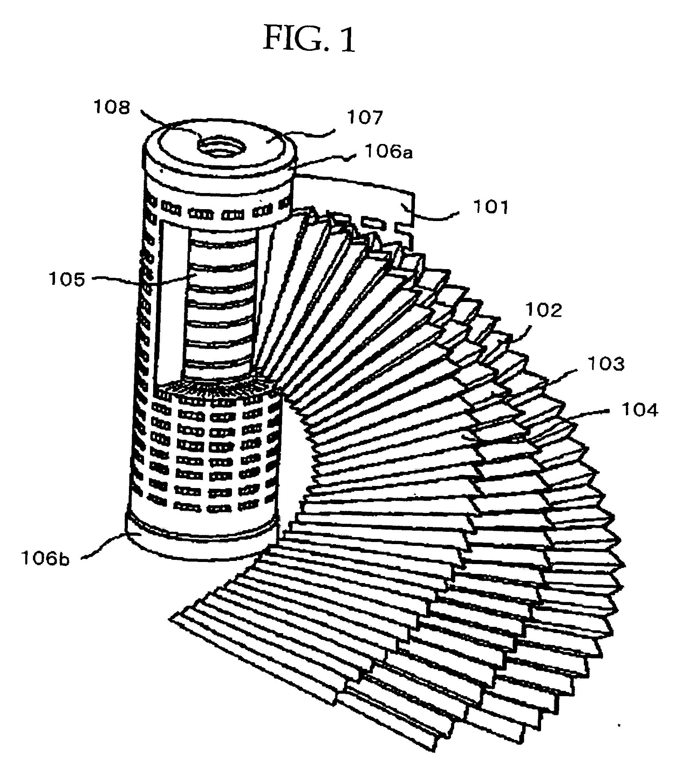

FIG. 1 is a development view illustrating a structure of an element of an element replaceable-type pleat filter cartridge. A precise filtration film 103 is folded in a state of being sandwiched by two film supports 102 and 104 and wound around a core 105 having a number of liquid collecting ports. There is located an outer circumferential cover 101 which protects the precise filtration film 103 from the outside. The precise filtration film 103 is sealed by end plates 106a and 106b at both ends of a cylinder. These end plates are contact with sealing portions of a filter housing (not depicted) via a gasket 107. A liquid filtered by the precise filtration film 103 is collected by the liquid collecting ports of the core 105 and discharged from a fluid outlet 108.

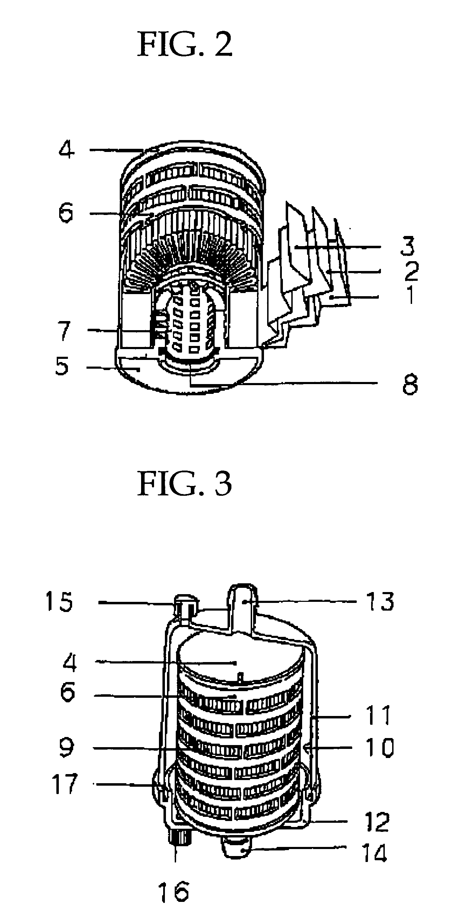

Each of FIGS. 2 and 3 illustrates a capsule-type pleat filter cartridge.

FIG. 2 is a development view showing an entire structure of a precise filtration film filter element before being incorporated into a capsule type filter cartridge. A precise filtration film 2 is folded in a state of being sandwiched by two supports 1 and 3 and wound around a filter element core 7 which has a number of liquid collecting ports. There is located a filter element cover 6 which protects the precise filtration film 6 from the outside. The precise filtration film 6 is sealed by an upper end plate 4 and a lower end plate 5 at both ends of a cylinder.

FIG. 3 is a view illustrating a structure of a capsule type pleat filter cartridge, which is integrally formed with a housing into which a filter element is incorporated. A filter element 10 is incorporated into a housing which is composed of a housing base and a housing cover. A lower end plate is sealed to a liquid collecting tube (not depicted) which is located at a center part of the housing base, via an O ring. A liquid is entered from a liquid inlet nozzle into a housing, pass through a filter medium 9, collected by liquid collecting ports of a filter element core 7 and then discharged from a liquid outlet nozzle 14. Typically, the housing base and the housing cover are heat-sealed liquid-tightly at a deposited portion 17.

FIG. 2 illustrates an embodiment in which sealing of a lower end plate to a housing base is carried out via an O ring. However, the sealing of the lower end plate to the housing base is sometimes carried out by heat-sealing or using an adhesive. Further, the sealing of the housing base to the housing cover can be also carried out using an adhesive, besides heat-sealing. FIGS. 1 to 3 illustrate embodiments of a precision filtration filter cartridge, and the present invention is not limited to those described in the figures.

Since a filtration filter using the crystalline polymer microporous film has a feature that it has a high filtration function and longer life span, the filtration device can be formed in compact construction. In conventional filtration devices, shortcomings of short filtration life have been solved by arranging a number of filtration units in parallel, however, the use of a filtration filter of the present invention makes it possible to drastically reduce the number of filtration units used in parallel. Further, the filtration filter makes it possible to drastically extend its replacement period of the filtration filter, and thus costs and time required for maintenance can be reduced.

The filtration filter of the present invention can be used in various situations where filtration is required, and is suitably used in precise filtration of gases and liquids, for example, in filtration of corrosive gases, various gases used in semiconductor industries, in the filtration and sterilization of water for pharmaceutical preparations, production processes for pharmaceutical preparations, foods, etc., as well as washing water for electronics. Since the filtration filter of the present invention is especially excellent in heat resistance and chemical resistance, it can be also efficiently used in high-temperature filtration and filtration of reactive reagents, which have not been achieved by conventional filtration filters.

The present invention can solve the conventional problems and provide a crystalline polymer microporous film capable of efficiently capturing microparticles achieving high-flow rate, has long filtration life and can be efficiently used in large-size equipment because of the high-flow rate; a manufacturing method of the crystalline polymer microporous film enabling efficient manufacturing of the crystalline polymer microporous film; and a filtration filter using the crystalline polymer microporous film.

### EXAMPLES

Hereafter, the present invention will be further described in detail referring to specific Examples, however, the present invention is not limited to the disclosed Examples.

### (Example 1)

### < Preparation of Crystalline Polymer Microporous Film >

### - Preparation of semi-baked film -

To 100 parts by mass of a polytetrafluoroethylene fine powder having a number average molecular mass of 6,200,000 ("POLYFLON FINE POWDER F104U" produced by Daikin Industries, Ltd.), 27 parts by mass of a hydrocarbon oil (ISOPER, produced by ESSO Sekiyu K.K.) were added as an extrusion aid to prepare a paste, the paste was extruded in the form of a round-bar, and calendered at a calendering speed of 50 m/min using a calender roll heated to a temperature of 70°C, thereby preparing a polytetrafluoroethylene film. The film was passed through a hot-drying furnace kept at 250°C to dry and remove the extrusion aid, thereby preparing an unbaked film of polytetrafluoroethylene having an average thickness of 100 µm, an average width of 150 mm and a specific gravity of 1.55.

One surface (heated surface) of the thus obtained unbaked polytetrafluoroethylene film was heated for 1 minute by a roller (surface material: SUS316) which was heated to a temperature of 345°C, thereby preparing a semi-baked film.

The resultant semi-baked film was stretched along its length by 12.5 times the original length at a temperature of 270°C using a roll and wound up around a wind-up roll once. Thereafter, the film was pre-heated at 305°C, and then stretched along its width by 30 times the original width at 270°C while both ends of the film being secured with clips. Thereafter, the film was thermally fixed at a temperature of 380°C, and then stretched 260 times the original area.

### - Hydrophilization treatment -

In hydrogen peroxide water having a concentration of hydrogen peroxide of 0.03% by mass, the stretched film, which had been impregnated with ethanol, was immersed (liquid temperature: 40°C) for 20 hours to prepare a microporous film, the film was pull out from the hydrogen peroxide water and then irradiated from above the microporous film, with an ArF excimer (having a wavelength of 193 nm) under the conditions of fluence 25 mJ/cm² /pulse with an exposure amount of 10J/cm² so as to be hydrophilized, and thus a hydrophilic polytetrafluoroethylene microporous film of Example 1 was prepared.

### < Evaluation of wettability >

The wettability of the PTFE microporous film was measured according to the following manner. Firstly, the PTFE microporous film was washed with pure water, dried, and then the wettability of the PTFE microporous film was measured using a wettability index standard liquid defined in JIS K6768. Specifically, a series of mixture liquids whose surface tensions vary under the atmospheric measurement conditions (23°C, and relative humidity of 50%) were successively dropped on the PTFE microporous film, and a highest surface tension of a mixture liquid obtained when the PTFE microporous film became wet with the mixture liquid was determined as the wettability index of the microporous film. As a result, the PTFE microporous film of Example 1 had a wettability index of 52 dyne/cm. This wettability index was greatly higher than that of a PTFE microporous film which was not irradiated with ultraviolet laser (wettability index: lower than 31 dyne/cm). The result demonstrated that the present invention made it possible to drastically improve the wettability of the surface of the PTFE microporous film.
(Example 2)

### < Preparation of Crystalline Polymer Microporous Film >

A polytetrafluoroethylene microporous film of Example 2 was prepared in a similar manner to that used in Example 1 except that the hydrophilization treatment was changed to the following hydrophilization treatment.

### - Hydrophilization treatment -

A hydrophilization treatment of Example 2 was carried out similarly to that used in Example 1 except that an aqueous solution of methylethylketone of a concentration of 0.179% by mass was used in place of the hydrogen peroxide water having a concentration of 0.03% by mass.

The resultant PTFE microporous film of Example 2 had a wettability index of 45 dyne/cm, which was measured similarly to the manner used in Example 1.
(Example 3)

### < Preparation of Crystalline Polymer Microporous Film >

A polytetrafluoroethylene microporous film of Example 3 was prepared in a similar manner to that used in Example 1 except that the hydrophilization treatment was changed to the following hydrophilization treatment.

### - Hydrophilization treatment -

A polytetrafluoroethylene microporous film before being subjected to a hydrophilization treatment was set to a plastic filter holder. Next, to prewet the PTFE microporous film, acetone was transferred to the holder to filter 50 mL of acetone through the PTFE microporous film using a syringe. Further, to replace the concentration of aqueous ketone in the PTFE microporous film with a concentration with which the ultraviolet laser irradiation was effective, and similarly to be above, 100 mL of an aqueous solution containing 0.5% by mass of ketone was filtered through the PTFE microporous film using a syringe to impregnate the film. The PTFE microporous film was taken out from the filter holder and irradiated with ultraviolet laser light under the following conditions, thereby preparing a hydrophilic polytetrafluoroethylene microporous film of Example 3.

### [Conditions of irradiation]

- light source: KrF (wavelength: 248 nm)
- fluence: 100 mJ/cm²/pulse
- incidence energy: 0.5J/cm² to 1.0J/cm²

The resultant PTFE microporous film of Example 3 had a wettability index of 32 dyne/cm, which was measured similarly to the manner used in Example 1.
(Example 4)

### < Preparation of Crystalline Microporous Film >

A polytetrafluoroethylene microporous film of Example 4 was prepared in a similar manner to that used in Example 1 except that the hydrophilization treatment was changed to the following hydrophilization treatment.

### - Hydrophilization treatment -

A polytetrafluoroethylene microporous film before being subjected to a hydrophilization treatment was fixed to a polypropylene jig so as not to shrink, and immersed in a sodium metal-naphthalene complex solution (product name: TETRAETCH, manufactured by Junkosha, Inc.) for 0.5 seconds, washed with isopropyl alcohol (IPA) and then washed with distilled water. Since a surface of the microporous film turned brown in color, the film was further immersed in hydrogen peroxide water having a concentration of 30% at 80°C for 24 hours to decompose and remove the brown portions, thereby preparing a hydrophilic polytetrafluoroethylene microporous film of Example 4.

The resultant PTFE microporous film of Example 4 had a wettability index of 36 dyne/cm, which was measured similarly to the manner used in Example 1.

### (Comparative Example 1)

### - Preparation of Crystalline Microporous Film -

A polytetrafluoroethylene microporous film of Comparative Example 1 was prepared in a similar manner to that used in Example 1 except that no hydrophilization treatment was performed.

The resultant PTFE microporous film of Comparative Example 1 had a wettability index of 27.3 dyne/cm, which was measured similarly to the manner used in Example 1.

### (Comparative Example 2)

### - Preparation of Crystalline Microporous Film -

A polytetrafluoroethylene microporous film of Comparative Example 2 was prepared in a similar manner to that used in Example 1 except that in the preparation of a semi-baked film, both surfaces of the film were baked at 345°C in an oven.

The resultant PTFE microporous film of Comparative Example 2 had a wettability index of 52 dyne/cm, which was measured similarly to the manner used in Example 1.

Subsequently, to confirm whether or not the average pore size of pores at the non-heated surface of the microporous film sample was larger than that of the heated surface and the average pore size of pores in the crystalline microporous film continuously changed from the non-heated surface toward the heated surface, each of the thus prepared polytetrafluoroethylene microporous films of Examples 1 to 4 and Comparative Examples 1 to 2 was measured with respect to film thickness (average film thickness) and P1/P2 value according to the following manners. Table 1 shows the measurement results.

### < Thickness of film (average film thickness) >

The thickness (average film thickness) of each of the polytetrafluoroethylene microporous film of Examples 1 to 4 and Comparative Examples 1 to 2 was measured using a dial thickness gauge (K402B, manufactured by ANRITSU Corp.). Specifically, three points were arbitrarily selected and measured, and an average value was found.

### < Measurement of P1/P2 value >

A P1/P2 value of each of the polytetrafluoroethylene microporous films of Examples 1 to 4 and Comparative Examples 1 to 2 was found, which was obtained when the film thickness of the microporous film was determined as "10", the average pore size of pores at a portion with a thickness of "1" in the depth direction from the film surface was determined as P1, and the average pore size of pores at a portion with a thickness of "9" was determined as P2.

The average pore size of pores in each of the PTFE microporous films was determined according to the following manner. First, a photograph of a film surface (SEM photograph, at 1,000-fold to 5,000-fold magnification) was taken by a scanning electron microscope (S-4000 model; deposited by E1030 model, both manufactured by Hitachi Ltd.), the photograph obtained was taken into an image processor (name of base machine: TV IMAGE PROCESSOR TVIP-4100II manufactured by Nippon Avionics Co., Ltd.; name of control software: TV IMAGE PROCESSOR IMAGE COMMAND 4198 produced by Ratoc Systems Engineering Co., Ltd.) to obtain an image of only crystalline polymer fibers. Then, the image was processed by arithmetic processing, thereby finding the average pore size.

**Table 1**

| | Average film thickness µm) | P1/P2 |
|---|---|---|
| Example 1 | 50 | 4.7 |
| Example 2 | 50 | 4.7 |
| Example 3 | 50 | 4.7 |
| Example 4 | 50 | 4.7 |
| Comparative Example 1 | 50 | 4.7 |
| Comparative Example 2 | 50 | 0.95 |

The results shown in Table 1 demonstrated that in each of the PTFE microporous films of Examples 1 to 4 and Comparative Example 1, the average pore size of pores at the non-heated surface was larger than the average pore size of pores at the heated surface, and the average pore size continuously changed from the non-heated surface toward the heated surface.

By contrast, it also turned out that in the PTFE microporous film of Comparative Example 2, the average pore size of pores at the non-heated surface was substantially same as the average pore size of pores at the heated surface, and the average pore size did not change from the non-heated surface toward the heated surface.

### < Filtration Test >

Thereafter, each of the PTFE microporous films of Examples 1 to 4 and Comparative Examples 1 to 2 was subjected to a filtration test. An aqueous solution of 0.01% by mass polystyrene latex (average particle size = 0.17µm) was filtrated at a differential pressure of 0.1 kg/cm². Table 2 shows the results.

**Table 2**

| | Filtration test |
|---|---|
| Example 1 | 1,400 mL/cm² |
| Example 2 | 1,300 mL/cm² |
| Example 3 | 1,200 mL/cm² |
| Example 4 | 1,300 mL/cm² |
| Comparative Example 1 | Measurement failed |
| Comparative Example 2 | less than 500 mL/cm² |

The measurement failed for the PTFE microporous film of Comparative Example 1 since the film had substantially no hydrophilicity. Moreover, clogging occurred in the microporous film of Comparative Example 2 at 500mL/cm².

In contrast to these microporous films, the microporous films of Examples 1 to 4 were capable of filtration until 1,400 mL/cm², 1,300 mL/cm², and 1,200 mL/cm², respectively. Accordingly, it was demonstrated that filtration life can be significantly extended by use of the crystalline polymer microporous film of the present invention.

### (Example 5)

### - Formation of Filter Cartridge -

The PTFE microporous film of Example 1 was sandwiched in two sheets of polypropylene nonwoven fabric and pleated into 138 pleats each having a pleat width of 10.5 mm and then rolled up in a cylindrical form, and the pleated portions were fused and sealed by an impulse sealer. The both ends of the cylindrical roll were cut off (each 2 mm), the cut surfaces were thermally fused to a portion of a polypropylene end plate, thereby forming an element replaceable filter cartridge.

Since the filter cartridge of the present invention includes a crystal polymer microporous film which is hydrophilic, it requires no complicated pre-hydrophilization treatment in the treatment with aqueous solution. Furthermore, the filter cartridge is excellent in solvent resistance since the crystalline polymer is used therein. Further, in the filtration tests, the filter cartridge was capable of achieving high-flow rate and longer filtration life without substantially causing clogging since each of pore portions was formed to have an asymmetry structure.

The crystalline polymer microporous film and the filtration filter including the same are capable of efficiently capturing microparticles for a long period of time and have improved abrasion resistance and excellent heat resistance and chemical resistance; therefore, they can be used under various circumstances where filtration is needed, and are suitably used for microfiltration of gases, liquids, etc., for example for filtration of corrosive gases and various gases for use in semiconductor industry, for filtration and sterilization of water for pharmaceutical preparations, production processes for pharmaceutical preparations, foods, etc., as well as washing water for electronics, and for high-temperature filtration and filtration of reactive reagents.

## Claims

1. A crystalline polymer microporous film, comprising:
a plurality of pores penetrating through from a first surface to a second surface,
wherein the average pore size of pores at the first surface is larger than the average pore size of pores at the second surface, the average pore size of pores in the crystalline microporous film continuously changes from the first surface toward the second surface, and an exposed surface of the crystalline polymer microporous film has hydrophilicity represented by a wettability index of 30 dyne/cm or more.

2. The crystalline polymer microporous film according to claim 1, wherein the exposed surface of the crystalline polymer microporous film has a wettability index of 33 dyne/cm or more.

3. The crystalline polymer microporous film according to any one of claims 1 and 2, wherein the crystalline polymer microporous film is obtained by heating a second surface of a film composed of a crystalline polymer so as to form a semi-baked film with a temperature gradient along its thickness being formed, stretching the semi-baked film, and subjecting the stretched film to a hydrophilization treatment.

4. The crystalline polymer microporous film according to claim 3, wherein the average pore size of pores at the heated surface, which is the second surface of the crystalline polymer film, is smaller than the average pore size of pores at a non-heated surface of the film, which is opposite to the heated surface, and the average pore size of pores in the crystalline microporous film continuously changes from the non-heated surface toward the heated surface.

5. The crystalline polymer microporous film according to any one of claims 1 to 4, wherein the crystalline polymer is polytetrafluoroethylene.

6. A manufacturing method of a crystalline polymer microporous film, the method comprising:
asymmetrically heating a first surface of a film of crystalline polymer so as to form a semi-baked film with a temperature gradient along its thickness being formed,
stretching the semi-baked film, and
subjecting the stretched film to a hydrophilization treatment.

7. The method according to claim 6, wherein the crystalline polymer is polytetrafluoroethylene.

8. The method according to any one of claims 6 and 7, wherein the semi-baked film is uniaxially stretched.

9. The method according to any one of claims 6 and 7, wherein the semi-baked film is biaxially stretched.

10. The method according to any one of claims 6 to 9, wherein the hydrophilization treatment is carried out by impregnating the stretched film with an aqueous solution of any one of hydrogen peroxide water and an aqueous organic solvent.

11. The method according to claim 10, wherein the aqueous organic solvent is selected from ketones.

12. The method according to any one of claims 6 to 9, wherein the hydrophilization treatment is a chemical etching treatment.

13. A filtration filter comprising:
a crystalline polymer microporous film,
wherein the crystalline polymer microporous film is the crystalline polymer microporous film according to any one of claims 1 to 5.

14. The filtration filter according to claim 13, wherein the filtration filter is processed into a pleat form.

15. The filtration filter according to any one of claims 13 and 14, wherein the first surface of the crystalline polymer microporous film, in which the average pore size of pores is larger than the average pore size of pores at the second surface, is used as a filtration surface of the filtration filter.
